# EUROPEAN PATENT APPLICATION

(11) **EP 2 000 718 A1**
(43) Date of publication of application: **10.12.2008**
(21) Application number: 07109508.7
(22) Date of filing: 04.06.2007
(51) Int. Cl.: F16K 31/00

(54) **Thermally activated pressure relief device with shape memory effect material**

(71) Applicant: LUXEMBOURG PATENT COMPANY S.A., 7440 Lintgen (LU)
(72) Inventor: Becker, Daniel, 8092 Bertrange (LU); Andreas, Thomas, 54441 Temmels (DE)
(74) Representative: Lecomte, Didier

(57) **Abstract**

A thermally activated pressure relief device comprising a valve body (1; 1') with a passageway and a closure element (2; 2'), said closure element (2; 2') being movable with respect to said valve body (1; 1') between an open position and a closed position of said passageway, said closure element (2; 2') being normally in a closed position; a shape memory effect element (8; 8') designed for releasing said closure element (2; 2') from its normally closed position when reaching a threshold temperature; and further comprising a lever mechanism (5; 5') with positive locking means (11; 11') engaging with said valve body (12; 12') or said closure element in order to hold said pressure relief device in its normally closed position, and wherein said shape memory effect element (8; 8') interacts with said lever mechanism (5; 5') by imparting a pivoting or bending movement thereof when reaching said threshold temperature in order to disengage said positive locking means (11; 11') and release said closure element (2; 2').

## Description

### Technical Field

The present invention is directed to a thermally activated pressure relief device, in particular for pressurized gas tanks or vessels like hydrogen vessels used in vehicles, using a shape memory effect material which deforms upon reaching a threshold temperature.

### Background Art

A pressure relief device that is thermally triggered by a shaped memory alloy element is known from US 5,788,212. It discloses essentially two embodiments, a first one where the shape memory element or an elongated element mechanically linked thereto is in direct contact with the closure element of the pressure relief device and a second one where the shape memory element or an elongated element mechanically linked thereto is in contact with an intermediate element shaped as a plunger retaining the closure element. In both cases, the shape memory element shortens upon heating so that its end portion or the end portion of the elongated element mechanically linked to the shape memory element retracts from its contact with the closure element or with the plunger and thereby stops retaining the closure element in its closed position.

This arrangement has several drawbacks. Indeed, the pressure in the vessel exerts a shearing stress on the end portion of the shape memory element or of the elongated element mechanically linked thereto via the closure element or the intermediate plunger. This can lead to high friction forces and hinder a proper functioning of the system. Additionally, the arrangement requires a high quantity of shape memory element which is quite costly and is also quite bulky. Also, there is no provision for an easy operation of closing back the device after trigger.

### Disclosure of Invention

The present invention seeks to provide an improved pressure relief device which solves at least one of the above mentioned problems or drawbacks.

The invention provides a thermally activated pressure relief device comprising a valve body with a passageway and a closure element, said closure element being movable with respect to said valve body between an open position and a closed position of said passageway, said closure element being normally in a closed position; a shape memory effect element designed for releasing said closure element from its normally closed position when reaching a threshold temperature; further comprising a lever mechanism with positive locking means engaging with said valve body or said closure element in order to hold said pressure relief device in its normally closed position, and wherein said shape memory effect element interacts with said lever mechanism by imparting a pivoting or bending movement thereof when reaching said threshold temperature in order to disengage said positive locking means and release said closure element.

Preferably said shape memory effect element lengthens when reaching said threshold temperature.

Preferably said lever mechanism comprises a lever arranged to pivot about a pivot or a flexible section or designed to bend and arranged with its main axis generally parallel to the movement axis of said closure element.

Preferably said lever comprises said positive locking means at an end portion thereof, preferably with a general form of a hook.

Preferably the pressure relief device comprises a biasing means, preferably a spring, urging said positive locking means to engage with said valve body or said closure element in order to hold said pressure relief device in its normally closed position.

The shape memory effect element can be designed as an elongate element, preferably a pin, placed in a corresponding elongate cavity and wherein one end portion of said elongate element is in stop contact with said cavity and the other end portion of said elongate element interacts with said lever mechanism by exerting a pressure thereto, preferably via an intermediate contact element, when reaching said threshold temperature.

The stop contact in said cavity can be made by a closing screw and which is preferably adjustable.

Preferably said lever mechanism is arranged on said closure element and said locking means engage with said valve body in said normally closed position.

The lever mechanism can be arranged on said valve body and said locking means engage with said closure element in said normally closed position.

Preferably, the thermally activated pressure relief device further comprises an electrical heating unit designed for selectively remotely triggering or testing purposes.

### Brief Description of Drawings

Figure 1(a) illustrates a first embodiment of the pressure relief device in its closed position.

Figure 1(b) illustrates the first embodiment of figure 1 (a) in its open position, i.e. when the pressure relief device is triggered.

Figure 2(a) illustrates a second embodiment of the pressure relief device in its closed position.

Figure 2(b) illustrates the second embodiment of figure 2(a) in its open position, i.e. when the pressure relief device is triggered.

### Mode(s) for Carrying Out the Invention

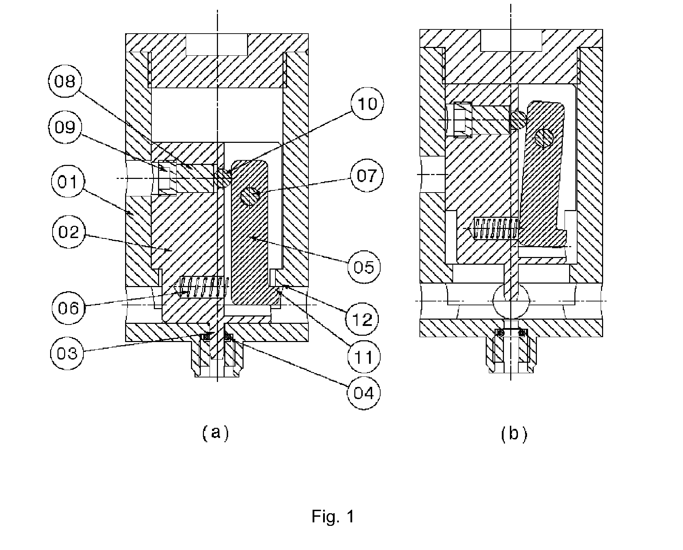

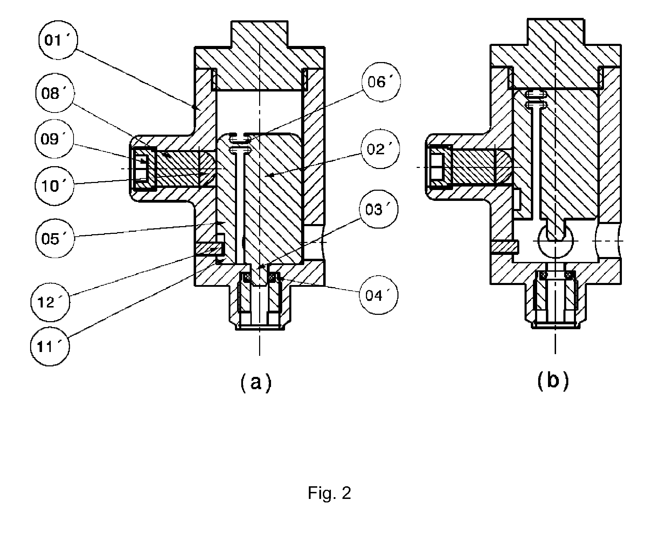

Figures 1(a) and 2(a) show a first embodiment of the invention where the shape memory element and the lever mechanism are integrated in the closure element. The pressure relief device comprises a valve body 1 with an inlet at its lower part to be connected to a vessel containing pressurized gas like hydrogen for example. A passageway is formed in the valve body between the gas inlet and a gas outlet for the gas to escape from the vessel in case of too high temperature, e.g. due to a fire. The valve body is essentially cylindrical and presents a bore along its longitudinal axis. This bore is closed by a cap which is preferably screwed. A piston 2 serving as closure element is slidably engaged in the bore. Its lower part has a protrusion in the form of a pin 3 which sealingly engages with the sealing means 4 in the passageway of the valve body. Any kind of valve seat and corresponding sealing means can be considered and are well known in the art. The closure element 2 is in its lower and closed position in figure 1(a). Figure 1(b) shows the closure element 2 in a lifted position under the pressure in the gas inlet and opens the passageway between the gas inlet and outlet. The gas outlet comprises a series of lateral bores perpendicular to the longitudinal axis of the pressure relief device but could be realised differently as is well known in the art. The piston of the closure element has a longitudinal cut out which receives the lever 5. The lever 5 is designed to pivot around the pivot 7 on the piston 2. Its main axis is parallel to the longitudinal axis of the pressure relief device. The lower end portion 11 of the lever 5 is hooked in order to engage with a protrusion 12 of the valve body 1. Both surfaces of the hook 11 and the protrusion 12 are flat and essentially perpendicular to the longitudinal axis of the device in order to minimize the force necessary for disengaging them. On the other hand, the surfaces have to be designed to guarantee a secure locking. Many other designs in line with these conditions can be considered.

A spring 6 is arranged in a cavity formed perpendicularly to the longitudinal axis of the device. The spring 6 biases the lever 5 in the locking position with the corresponding protrusion 12 of the valve body 1.

A shape memory element 8, preferably formed as a cylinder or pin, is arranged in a cavity of the piston 5, preferably formed as a bore. The shape memory element 8 has a stable form until reaching a threshold temperature in the order of 100° C. When reaching this temperature (for example 110°C with a tolerance of 10°C), the element 8 lengthens substantially, typically from 2% to 10%. The following commercially available shape memory alloys can be used: NiTi (nickel-titan), NiTiPt (nickel-titan-platinum), mono-crystalline CuAlNi (copper-aluminium-nickel). The typical length variation for such a material with a length of 10 mm ranges approximately from 0.2 mm to 0.5 mm. The typical geometry of such an element is a pin of about 10 mm in length and from about 2 to about 8 mm in diameter. The force exerted by an element made of NiTi with a length of 10 mm and a diameter of 2 mm is about 1000N. When increasing the diameter, the force exerted becomes higher. For example, an element made of NiTi with a diameter of 8 mm can apply a force of about 40.000N. The size and shape and also the alloys for the element detailed here above a purely exemplary.

One end of the element 8 abuts against a cap or adjusting screw 9 serving as a stop. An opening is made in the valve body 1 which aligns with the cavity of the piston for the shape memory element when the device is in its closed position. It allows the insertion of the shape memory element 8 when the closure element 5 is in its closed position. The other end of the element 8 is in contact via an intermediate element like a contact ball 10 with the upper portion of the lever 5 beyond the pivot 7. The contact ball 10 is positioned through an aperture formed in the piston and which is narrower than the cavity of the element 8.

As long as the element 8 does not attain the threshold temperature of its shape memory material, the pressure relief device remains in its closed state as illustrated in figure 1(a). The lower portion 11 of the lever 5 is engaged with the protrusion 12 of the valve body and remains engaged under the biasing force of the spring 6 despite the upward force exerted by the high pressure of the gas in the vessel and acting on the cross-sectional section of the protrusion 3. In this state, the upper portion of the lever is in contact with the element 8 through the contact ball 10.

It shall be mentioned that there must not necessarily be a contact between the lever 5 or more generally speaking between the lever mechanism and the shape memory element 8 in the closed state of the device. There may be indeed some clearance depending on the construction of the device and the mechanical tolerances of the different parts.

It shall also be mentioned that the presence of a biasing means like the spring 6 is not mandatory. Indeed, the size and shape of the engaging surfaces of the locking means 11 and 12 as well as the geometry of the whole locking mechanism (including the lever mechanism, the pivot position, the locking means, ...) might be designed such that the positive locking means remain engaged without biasing means.

When the temperature of the shape memory element 8 reaches its threshold level, its shape abruptly changes such that its length increases (typically by 2% or more). This increase in length has for effect that the end portion of the element 8 pushes via the contact ball 10 the upper portion of the lever 5 to slightly pivot clockwise (in the case of figure 1) the lever against the biasing force of the spring. The locking means 11 and 12 are then disengaged and the gas pressure in the vessel can push the closure element 2 upwardly and open the passageway thereby allowing a release of the vessel pressure. This state is illustrated in figure 1(b).

The lever mechanism 5 is designed to amplify the change of geometry, here more particularly the length variation, of the shape memory element. This mechanism is therefore characterized by a transmission ratio which allows a slight change of geometry of the shape memory element to be converted into a movement of the lever 5 and its locking means which allows a mechanical disengagement. A typical transmission ratio is of about 5 corresponding here to the ratio of the distances along the longitudinal axis of the lever 5 between the area in contact with the contact ball 10 and the axis of the pivot and between this axis and the locking means 11.

The device can be manually closed by pushing downwards the closure element by any means (for example by inserting a rod through an aperture in the upper cap of the valve body or by removing the cap).

The shape memory alloy can then removed which has for effect to release the lever which then engages again the protrusion of the valve body 12 under the biasing force of the spring. A new shape memory element or a shape memory element which has been deformed from its memory shape to a compressed shape can then be inserted in the cavity and adjusted against or close to the contact ball and the upper portion of the lever by means of the screw 9.

Alternatively, the shape memory element 8 can remain in its cavity and be compressed from its memory shape back to its initial shape by exerting a corresponding effort on the opposite side of the upper portion of the lever 5, by means, for example, of a thread mechanism on the valve body opposite to the opening in said valve body for inserting the element 8 (not shown).

Restoring the pressure relief device back to its closed position is therefore relatively easy.

A second embodiment is illustrated in figures 2(a) and 2(b). This second embodiment differs from the first one essentially in that

- the lever 5' is unitary with the piston 2' and is hinged with the piston by means of a flexible section or flexure element 7' instead of a pivot;

- the shape memory element 8' is arranged in a cavity of the valve body 1' and not the piston.

This second embodiment is just one example of the many variations of the invention that can be considered. The functioning principle is exactly the same as for the first embodiment. The shape memory element 8' is more exposed to the ambient conditions of the valve. This can be advantageous if the device has to react rapidly to any ambient increase of temperature. The machining of the lever 5' unitary with the piston 2' provides a higher precision and cheaper production costs.

Still alternatively, the lever mechanism can be arranged on the valve body instead of the closure element (not shown). The positive locking means of the lever mechanism would then engage with the closure element in order to hold the pressure relief device in its closed position under normal conditions. Similarly to the first and second embodiments disclosed here above, the shape memory element could then be arranged either on the valve body or the closure element.

Additionally, a heating unit, preferably an electric one, can be arranged on the valve body or on the closure element depending where the shape memory element is arranged in the device, in order to be able to test or remotely trigger the device. Indeed, it might be interesting to be able to test the device, in particular its mechanics, and/or to be able to remotely trigger the device, for example in case of fire of a vehicle or any other applications provided with a tank or vessel of combustible pressurized gas.

The heating unit must not necessarily be mounted definitively but can rather be temporarily assembled with the pressure device for testing purposes, for example on a production chain. In any case, the pressure device, i.e. more particularly its mechanics, can be tested before being delivered to the client.

## Claims

1. A thermally activated pressure relief device comprising
- a valve body (1; 1') with a passageway and a closure element (2; 2'), said closure element (2; 2') being movable with respect to said valve body (1; 1') between an open position and a closed position of said passageway, said closure element (2; 2') being normally in a closed position;
- a shape memory effect element (8; 8') designed for releasing said closure element (2; 2') from its normally closed position when reaching a threshold temperature;
**characterized in that** it further comprises
- a lever mechanism (5; 5') with positive locking means (11; 11') engaging with said valve body (12; 12') or said closure element in order to hold said pressure relief device in its normally closed position, and wherein said shape memory effect element (8; 8') interacts with said lever mechanism (5; 5') by imparting a pivoting or bending movement thereof when reaching said threshold temperature in order to disengage said positive locking means (11; 11') and release said closure element (2; 2').

2. A thermally activated pressure relief device according to claim 1, wherein said shape memory effect element (8; 8') lengthens when reaching said threshold temperature.

3. A thermally activated pressure relief device according to the preceding claim, wherein said lever mechanism comprises a lever (5; 5') arranged to pivot about a pivot (7) or a flexible section (7') or designed to bend and arranged with its main axis generally parallel to the movement axis of said closure element (2; 2').

4. A thermally activated pressure relief device according to the preceding claim, wherein said lever (5; 5') comprises said positive locking means (11; 11') at an end portion thereof, preferably with a general form of a hook.

5. A thermally activated pressure relief device according to the preceding claim, further comprising a biasing means (6), preferably a spring, urging said positive locking means (11) to engage with said valve body (12) or said closure element in order to hold said pressure relief device in its normally closed position.

6. A thermally activated pressure relief device according to any one of claims 3-5, wherein said shape memory effect element (8; 8') is designed as an elongate element, preferably a pin, placed in a corresponding elongate cavity and wherein one end portion of said elongate element (8; 8') is in stop contact with said cavity and the other end portion of said elongate element (8; 8') interacts with said lever mechanism (5; 5') by exerting a pressure thereto, preferably via an intermediate contact element (10; 10'), when reaching said threshold temperature.

7. A thermally activated pressure relief device according to the preceding claim, wherein said stop contact in said cavity is made by a closing screw (9; 9') and which is preferably adjustable.

8. A thermally activated pressure relief device according to any of the preceding claims, wherein said lever mechanism (5; 5') is arranged on said closure element (2; 2') and said locking means (11; 11') engage with said valve body (12; 12') in said normally closed position.

9. A thermally activated pressure relief device according to any one of claims 1-7, wherein the lever mechanism is arranged on said valve body and said locking means engage with said closure element in said normally closed position.

10. A thermally activated pressure relief device according to any of the preceding claims, further comprising an electrical heating unit designed for selectively remotely triggering or testing purposes.
